(19) Europäisches Patentamt / European Patent Office / Office européen des brevets

(11) **EP 4 782 208 A1**

(12) **DEMANDE DE BREVET EUROPEEN**

(43) Date de publication:
**29.07.2026 Bulletin 2026/31**

(21) Numéro de dépôt: **26152711.3**

(22) Date de dépôt: **19.01.2026**

(51) Classification Internationale des Brevets (IPC):
**B33Y 80/00** (2015.01)  **F28F 7/02** (2006.01)

(52) Classification Coopérative des Brevets (CPC):
**B33Y 80/00; F28F 7/02**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **22.01.2025 FR 2500653**

(71) Demandeur: **Commissariat à l'Energie Atomique et aux Energies Alternatives
75015 Paris (FR)**

(72) Inventeurs:
• **PHAM, Quynh-Trang**
  **38054 GRENOBLE CEDEX 09 (FR)**
• **COSTE, Pierre**
  **38054 GRENOBLE CEDEX 09 (FR)**
• **GLEYZES, Hervé**
  **38054 GRENOBLE CEDEX 09 (FR)**
• **PRA, Franck**
  **38054 GRENOBLE CEDEX 09 (FR)**
• **CANEY, Nadia**
  **38054 GRENOBLE CEDEX 09 (FR)**

(74) Mandataire: **Ipsilon
12, Avenue d'Italie
75013 Paris (FR)**

(54) **MODULE D ECHANGEUR DE CHALEUR A ZONE D ECHANGE A AILETTES SOUS LA FORME D'UNE STRUCTURE D ECHANGE THERMIQUE DE SURFACE MINIMALE TRIPLEMENT PERIODIQUE (TPMS) ALLONGEE SELON UNE DIRECTION D ECOULEMENT**

(57) Module d'échangeur de chaleur à zone d'échange à ailettes sous la forme d'une structure d'échange thermique de surface minimale triplement périodique (TPMS) allongée selon une direction d'écoulement.

L'invention concerne un module (1) d'échangeur de chaleur à deux circuits de fluides, s'étendant selon une direction longitudinale (X) et dont un premier circuit comprend des ailettes sous la forme d'une structure d'échange thermique de surface minimale triplement périodique (TPMS) constituée d'au moins une cellule à motif élémentaire, allongée d'un facteur d'allongement $F_x$ supérieur à 1 selon au moins la direction longitudinale X, et dont l'intérieur définit la section de passage du fluide du premier circuit qui est constante sur la longueur selon la direction X.

[Fig 2]

10

Fig. 2

EP 4 782 208 A1

## Description

### Domaine technique

La présente invention concerne les modules d'échangeurs de chaleur à deux circuits de fluides.

L'invention vise plus particulièrement à obtenir de tels modules dont les performances thermiques sont significativement par rapport à l'état de l'art.

Les échangeurs de chaleur connus comprennent soit un, soit au moins deux circuits à canaux de circulation interne de fluide. Dans les échangeurs à au moins deux circuits de fluide, les échanges thermiques se réalisent entre les deux circuits de fluide.

Un module d'échangeur de chaleur selon l'invention peut aussi être mis en œuvre dans toute autre application nécessitant un échange entre deux fluides, tels qu'un liquide et un gaz, ou deux liquides ou encore deux gaz, en particulier lorsque des variations de température rapides et/ou de grande amplitude sont en jeu.

Par « fluide primaire », on entend dans le cadre de l'invention, le sens usuel en thermique, à savoir le fluide chaud qui transfère sa chaleur au fluide secondaire qui est le fluide froid.

A contrario, par « fluide secondaire », on entend dans le cadre de l'invention le sens usuel en thermique, à savoir le fluide froid auquel est transféré la chaleur du fluide primaire.

### Technique antérieure

Les échangeurs de chaleur, dits à plaques, existants, présentent des avantages importants par rapport aux échangeurs de chaleur, dits à tubes, existants, en particulier du point de vue de leurs performances thermiques et de leur compacité grâce à un rapport de la surface sur le volume d'échange thermique favorablement élevé. Cela étant, les échangeurs à plaques présentent généralement de petits diamètres de canaux, ce qui risque de poser problème au cours de leur exploitation, exposés à un milieu corrosif et aux produits de fissions, pouvant à terme boucher ou détériorer de si petites sections de passage des canaux, ce qui est prohibitif.

Les échangeurs à tubes connus sont par exemple des échangeurs à tubes et calandre, dans lesquels un faisceau de tubes droits ou cintrés en forme de U ou en forme d'hélice est fixé sur des plaques percées et disposé à l'intérieur d'une enceinte dénommée calandre. Dans ces échangeurs à tubes et calandre, l'un des fluides circule à l'intérieur des tubes tandis que l'autre fluide circule à l'intérieur de la calandre. Ces échangeurs à tubes et calandre présentent un volume important et sont donc de faible compacité.

Récemment, des échangeurs de chaleur à zone d'échange thermique basée sur des surfaces minimales triplement périodiques (« TPMS ») ont été envisagés.

Une structure constituée de motifs TPMS est un type de structure cellulaire (treillis, mousses, voronoï, ...) et dont la répartition de matière est mathématiquement définie par des équations implicites. Les structures TPMS sont périodiques dans trois directions et minimisent la surface dans un volume donné. Ces surfaces ont une courbure moyenne nulle et divisent l'espace en deux domaines continus et non sécants.

Du point de vue thermique, ces structures sont particulièrement intéressantes pour l'application d'échangeur car elles présentent un rapport élevé entre la surface d'échange et le volume donné. Cela permet d'améliorer considérablement les performances thermiques des échangeurs. De plus, leur courbure continue empêche la formation de zones mortes associées à un mauvais mélange d'écoulement et aussi à l'encrassement.

Les structures TPMS présentent une amélioration du transfert de chaleur et du transfert de masse en raison de la rotation continue des chemins d'écoulement et des grandes zones d'interface. Jusqu'à récemment, les structures TPMS étaient largement théoriques, mais avec les progrès des technologies de Fabrication Additive, la réalisation d'échangeurs à structures TPMS est étudiée pour un usage industriel.

Autrement exprimées, les structures TPMS conventionnelles/en temps normal sont constituées de deux domaines de volume de fluide interpénétrés séparés par une paroi. Des exemples de structures unitaires triplement périodiques TPMS comprennent des structures basées sur des motifs élémentaires comme Schwarz-D (D pour « Diamond »), Schoen-G, Schwarz-P (P pour « Primitive »), Schoen IWP et gyroïde, connus. On pourra se reporter à la publication [1].

Les TPMS ont la caractéristique périodique qui permet une réplication selon chacun des trois directions d'espace X, Y et Z pour produire un composant comme un échangeur de chaleur ou un réacteur.

Chaque cellule unitaire TPMS standard est séparée en deux volumes par une structure de division (une paroi solide), définie par une expression mathématiquement implicite. La structure de division peut être basée sur un motif Schoen-G, Schwarz-D, Schwarz-P ou Schoen-IWP ou d'autres motifs de surface TPMS.

Les motifs Schwarz-D, Schoen-G, Schwarz-P et Schoen IWP sont exprimés sous la forme d'une expression mathématique $F(x,y,z)$ égale à zéro, qui est la fonction de niveau de surface de la structure TPMS, comme indiqué dans les équations de base suivantes du tableau 1.

[Tableau 1]

| Motif | Equation |
|---|---|
| Schwarz D | $F(x,y,z) = \sin(2\pi x/L)*\sin(2\pi y/L)*\sin(2\pi z/L) + \sin(2\pi x/L)*\cos(2\pi y/L)*\cos(2\pi z/L) + \cos(2\pi x/L)*\sin(2\pi y/L)*\cos(2\pi z/L) + \cos(2\pi x/L)*\cos(2\pi y/L)*\sin(2\pi z/L) = 0$ (1) |
| Schwarz P | $F(x,y,z) = \cos(2\pi x/L) + \cos(2\pi y/L) + \cos(2\pi z/L) = 0$ (2) |
| Schoen G | $F(x,y,z) = \cos(2\pi x/L)\sin(2\pi y/L) + \cos(2\pi y/L)\sin(2\pi z/L) + \cos(2\pi z/L)\sin(2\pi x/L) = 0$ (3) |
| Schoen IWP | $F(x,y,z) = 2*\cos(2\pi x/L)\cos(2\pi y/L) + 2*\cos(2\pi x/L)\cos(2\pi z/L) + 2*\cos(2\pi y/L)\cos(2\pi z/L) - \cos(4\pi x/L) - \cos(4\pi y/L) - \cos(4\pi z/L) = 0$ (4) |

Les surfaces TPMS de base avec la fonction F(x,y,z) = 0 sont également appelées les surfaces TPMS nulles. La constante zéro entraîne la séparation de la cellule unitaire en deux volumes égaux. Les sections de passage d'écoulement sont égales dans ces deux volumes.

La demande de brevet US2021/0180885 divulgue une structure TPMS d'échange thermique avec motifs élémentaires qui présentent une adaptation du diamètre hydraulique, et propose une méthode pour construire le cœur d'un échangeur à partir d'un certain nombre des cellules unitaires de structure TPMS avec des surfaces dont les fonctions sont non nulles en introduisant un paramètre de décalage K ≠ 0 dans la fonction mathématiquement implicite des TPMS classiques.

Les équations (1) à (4) connues du tableau 1 deviennent donc égale à K.

Ce paramètre de décalage dans les fonctions implicites des TPMS affecte la taille de deux canaux séparés. Avec un paramètre non nul de décalage, la section d'un canal s'agrandit tandis que l'autre se rétrécit. Un échangeur avec une structure d'échange TPMS intégrant paramètre de décalage non nul est particulièrement utile pour les cas où il y a des grosses différences de débit ou des fortes différences de pertes de charge entre les deux canaux ou bien lorsque les propriétés physiques des fluides de travail dans les deux canaux sont significativement différentes. Par exemple, un fluide ayant une viscosité plus élevée peut s'écouler dans le canal en expansion pour réduire la résistance hydrodynamique et un fluide ayant une conductivité thermique plus faible peut s'écouler dans le canal qui se rétrécit pour améliorer l'efficacité du transfert de chaleur.

Le brevet US11389765B2 propose un échangeur de chaleur dont la structure d'échange TPMS fabriquée par la fabrication additive présente des motifs élémentaires dont la taille de maille est modifiée progressivement sur la longueur de sorte que la structure est non uniforme entre l'entrée et la sortie. Les cellules unitaires ou motifs élémentaires ne se croisent pas, formant une paroi interne continuellement incurvée au sein de la structure. Le fluide de travail se déplace de l'entrée à la sortie via plusieurs chemins connectés. Quatre motifs élémentaires ont été étudiés dont le gyroïde, le Schwarz-D, le Schwarz-P et le I-WP. Avec leur caractéristique périodique, les cellules unitaires TPMS peuvent être reproduites selon les trois directions x, y et z pour constituer un échangeur de chaleur. Cependant, ces géométries répétitives ne suffisent pas à elles seules à constituer un échangeur. La structure doit être reliée à une ou aux plusieurs entrées et sorties pour réaliser un circuit. Avec les conceptions existantes actuelles, des connexions fluides pourraient être réalisées. Cependant, il est peu probable que cela conduise à une distribution efficace des fluides et à un écoulement uniforme. Les échangeurs obtenus selon l'enseignement de ce brevet pourraient être utilisés pour des applications spécifiques dans les cycles de SCO2, où des échangeurs de chaleur compacts fonctionnant à haute température et pression (400-800°C, jusqu'à 300 bar) sont nécessaires. La modification de la taille de maille améliore les caractéristiques d'écoulement et facilite les connexions, mais cela ne garantit pas une robustesse structurelle. Ce brevet propose également de faire varier l'épaisseur de paroi de la structure TPMS en fonction de la taille des cellules, ou bien de faire varier l'épaisseur de paroi en fonction des conditions de fonctionnement attendues (pression, température, ...). Cela peut garantir que la structure est robuste et peut supporter des réactions et/ou du transfert de chaleur et de masse sous des conditions opératoires variées. Pour réaliser une telle modification d'épaisseur, la fonction de niveau F(x,y,z) de la structure TPMS dans les équations de (1) à (4) peut être modifiée selon l'équation :

$$\mathrm{Fmodified} = \mathrm{F}* \mathrm{H\varepsilon}(\Omega) \ (5)$$

dans laquelle $H_\varepsilon (\Omega)$ est une fonction qui détermine la nature de la variation dans une zone avec taille variable :

- 

$$\mathrm{H\varepsilon} = 1 \ \mathrm{if} \ \Omega < \text{-}\varepsilon$$

-

$$H\varepsilon = 1+ \Omega/\varepsilon+1/\pi^*\sin(\pi\Omega/\varepsilon) \text{ if } -\varepsilon \leq \Omega \leq \varepsilon$$

•

$$H\varepsilon = 0 \text{ if } \Omega > \varepsilon$$

$\varepsilon$ étant l'épaisseur de la zone avec taille variable.

Cette fonction $H\varepsilon(\Omega)$ contrôle la variation d'épaisseur ainsi que la localisation de cette variation. Cela donne une épaisseur non uniforme le long d'au moins une direction (x, y et z). Ainsi, les géométries TPMS sont modifiées pour répondre à la résistance structurelle et la robustesse demandée. Une telle méthode présente un moyen flexible de maintenir la robustesse structurelle dans des zones sélectionnées de la géométrie TPMS, en particulier lorsque ces pièces fonctionnent sous haute pression et/ou haute température.

La variation de l'épaisseur de paroi peut être combinée avec la taille variable ou hiérarchique des cellules, conduisant à une structure TPMS avec des sections d'écoulement variées en fonction des zones différentes et avec une épaisseur de paroi non uniforme le long d'au moins une longueur (x, y, z) de la structure.

La demande de brevet US 2023/0304743A1 concerne aussi la construction du cœur d'un échangeur de chaleur en utilisant des cellules unitaires TPMS. La structure comprend la connexion des cellules unitaires TPMS selon les trois directions x, y et z. Dans le cas standard, les cellules unitaires TPMS sont compris dans des boites d'encombrement cubiques, dits voxels ou cellules, avec les longueurs périodiques L similaires le long des trois axes. Les motifs TPMS surfaciques sont représentées mathématiquement par des fonctions d'approximation implicite comme mentionné ci-dessus dans les deux demandes/brevets précités. Une telle fonction divise le volume de la cellule unitaire en deux labyrinthes (domaines fluidiques), formant deux sous-volumes avec deux entrées et deux sorties. Deux fluides peuvent circuler dans chaque sous-volume depuis une entrée vers la sortie respective. Cette demande propose de faire varier la dimension des cellules unitaires TPMS afin de pouvoir adapter certaines contraintes d'espace qui limiteraient la dimension de l'échangeur global ainsi que d'améliorer potentiellement le transfert de chaleur à l'intérieur de l'échangeur dans au moins une direction lorsque cela est nécessaire. Avec l'introduction d'un coefficient A, B, C respectivement à chacune des composantes x, y et z dans la fonction de niveau de la surface TPMS connue (équations (1) à (4)), les dimensions des cellules unitaires peuvent varier indépendamment le long de l'une des trois directions orthogonales. Compte tenu de ces coefficients A, B et C à la surface implicite d'une cellule unitaire Schwarz P (équation (2)), la nouvelle fonction devient :

$$F(x,y,z) = A^*\cos(2\pi x/L) + B^*\cos(2\pi y/L) + C^*\cos(2\pi z/L) = 0 \qquad (6)$$

dans laquelle A, B et C peuvent être des nombres réels et peuvent avoir les relations suivantes : A=B=C, A=B~C, A~B=C, A~B~C, etc. Cette méthode peut être appliquée pour les autres cellules TPMS comme la gyroïde, la Schwarz D et autres. De cette manière, la cellule unitaire et la structure interne de l'échangeur peuvent être allongées selon au moins une direction en utilisant les coefficients ci-dessus pour les fonctions de surface implicites. L'allongement pourrait transformer une géométrie de section de passage fluidique circulaire en une ellipse afin d'augmenter la section de passage de l'écoulement, conduisant à une amélioration du transfert de chaleur. Une telle méthode pourrait être utilisée lorsque l'augmentation de la surface de contact et le transfert de chaleur sont favorables dans une ou plusieurs directions. L'application d'un coefficient d'allongement A dans la fonction de niveau de surface implicite dans la direction x conduit à une augmentation de la section de passage du fluide dans le plan yz et à une amélioration du transfert thermique dans la direction x.

Il existe un besoin d'améliorer encore les modules d'échangeurs de chaleur à deux circuits de fluide, notamment ceux à structure TPMS, afin d'augmenter les performances thermiques.

Le but de l'invention est de répondre au moins partiellement à ce besoin.

## Exposé de l'invention

Pour ce faire, l'invention a pour objet un module d'échangeur de chaleur à deux circuits de fluides, s'étendant selon une direction longitudinale (X) et dont un premier circuit comprend des ailettes sous la forme d'une structure d'échange thermique de surface minimale triplement périodique (TPMS) constituée d'au moins une cellule à motif élémentaire, allongée d'un facteur d'allongement Fx supérieur à 1 selon au moins la direction longitudinale X, et dont l'intérieur définit la section de passage du fluide du premier circuit qui est constante sur la longueur selon la direction X.

Avantageusement, l'épaisseur de la paroi solide de l'échangeur et/ou l'épaisseur des ailettes est constante le long des trois axes X, Y et Z. (Pour avoir un bon transfert de chaleur, il est préférable d'avoir une paroi fine. Cependant, en raison de la limitation de la fabrication additive qui peut produire une rugosité de surface importante par rapport à l'épaisseur souhaitée des ailettes, il n'est parfois pas possible de réduire cette épaisseur. De plus, cela peut devenir encore plus compliqué si l'épaisseur des ailettes n'est pas constante sur toute la longueur de l'échangeur. Par conséquent, l'épaisseur des ailettes est avantageusement maintenue constante pour faciliter la fabrication.

Selon une variante de réalisation avantageuse, à partir d'une longueur uniforme de base L, les longueurs périodiques de chaque cellule peuvent être égales à $L_x = L*F_x$, $L_y = L*F_y$, $L_z = L*F_z$ en étant allongées selon au moins deux X et Y, de préférence selon le trois des directions X, Y, Z orthogonales entre elles.

Selon une autre variante de réalisation avantageuse, chaque cellule de a structure d'échange thermique TPMS est en outre allongée d'un facteur d'allongement Fy et/ou Fz supérieur à 1 selon au moins une autre direction longitudinale Y et/ou Z, les directions X, Y, Z étant orthogonales entre elles.

Selon un mode de réalisation avantageux, chaque cellule de la structure d'échange thermique TPMS étant en outre allongée d'un autre facteur F'x supérieur à 1 le long de la direction X, selon l'axe principal de l'écoulement du fluide dans un des deux circuits. On améliore ainsi davantage la performance du module d'échangeur.

Selon un mode de réalisation avantageux, la structure d'échange thermique TPMS étant à cellules à motif élémentaire Schwartz-D (Diamant) dont la fonction implicite de surface s'écrit selon l'équation (7) suivante:

$$F(x,y,z) = \sin(2\pi x/L_x)*\sin(2\pi y/L_y)*\sin(2\pi z/L_z) + \sin(2\pi x/L_x)*\cos(2\pi y/L_y)*\cos(2\pi z/L_z) + \cos(2\pi x/L_x)*\sin(2\pi y/L_y)*\cos(2\pi z/L_z) + \cos(2\pi x/L_x)*\cos(2\pi y/L_y)*\sin(2\pi z/L_z) = 0 \text{ avec } L_x = L*F_x, L_y = L*F_y, L_z = L*F_z$$

D'autres modes peuvent être envisagées avec la structure d'échange thermique TPMS à cellules à motif élémentaire choisi parmi gyroïde, Schoen IWP, Schwarz P, Schoen G.

Avantageusement, le facteur d'allongement Fx est compris entre 1 et 6.

Avantageusement encore, le facteur d'allongement Fy selon une autre direction orthogonale Y est compris entre 1 et 3.

De préférence, les collecteurs d'entrée et de sortie du premier circuit sont agencés selon la direction longitudinale X et aux extrémités longitudinales du module.

L'invention concerne également un échangeur de chaleur, comprenant une pluralité de modules d'échangeurs de chaleur tels que décrits précédemment, reliés par liaison fluidique entre eux ou non.

L'invention concerne également l'utilisation de l'échangeur de chaleur tel que décrit précédemment, le fluide du premier circuit, en tant que fluide primaire, étant un liquide et le fluide du deuxième circuit, en tant que fluide secondaire, étant un gaz.

L'invention est essentiellement un module d'échangeur de chaleur à deux circuits de fluide à structure d'échange thermique à structure TPMS, de préférence avec des motifs élémentaires Schwartz D, qui est allongée avec un facteur d'allongement supérieur à 1 selon au moins la direction longitudinale d'écoulement d'un des deux fluides mais en conservant une section de passage de fluide constante sur la longueur de la structure d'échange thermique.

Selon l'invention, un motif élémentaire TPMS de base peut être pré-allongé dans les trois directions X, Y, Z avec des facteurs d'allongement différents Fx, Fy, Fz. Un motif peut également avoir des dimensions homogènes selon les trois directions X, Y, Z, et pour améliorer la performance du module d'échangeur constitué de plusieurs motifs allongés, on peut encore allonger chaque motif selon l'axe principal de l'écoulement du fluide de travail, dont la direction X. Un allongement différent selon les trois directions X, Y, Z permet à la structure TPMS de s'adapter aux contraintes géométriques de l'application du module d'échangeur, pour un espace confiné ou un volume limité par exemple.

Comme corroboré par des calculs de mécanique des fluides numérique (CFD pour « Computational Fluid Dynamics ») l'invention permet d'améliorer les performances thermiques comparativement aux modules d'échangeur selon l'état de l'art, en augmentant significativement le transfert thermique tout en diminuant la perte de charges au sein du module.

En outre, un allongement selon la direction d'impression en fabrication additive permet une meilleure fabricabilité, notamment par la réduction des surfaces en porte, et par un dépoudrage du volume rempli de la structure cellulaire.

Un module d'échangeur peut fonctionner en circulation à courant croisé.

D'autres avantages et caractéristiques de l'invention ressortiront mieux à la lecture de la description détaillée d'exemples de mise en œuvre de l'invention faite à titre illustratif et non limitatif en référence aux figures suivantes.

**Brève description des dessins**

[Fig 1A] la figure 1A montre une cellule élémentaire à motif Schwartz D selon l'état de l'art avec les dimensions homogène, cette cellule étant générée à l'aide un logiciel d'ingénierie.

[Fig 1B] la figure 1B à motif montre une cellule élémentaire Schwartz D allongée selon l'invention, cette cellule étant également générée à l'aide un logiciel d'ingénierie.

[Fig 2] la figure 2 est une vue d'une portion constituée de deux cellules à motif élémentaire Schwartz-D allongé selon la figure 1B, obtenue en répétant cette cellule une fois selon la direction Z.

[Fig 3] la figure 3 est une vue en perspective du domaine fluidique d'un module (éprouvette de simulation) d'échangeur de chaleur selon un mode de réalisation de l'invention à structure TPMS constituant la zone d'échange thermique constituée de plusieurs cellules à motif élémentaire Schwartz-D allongées selon la figure 1B.

[Fig 4] la figure 4 illustre sous forme d'une droite et de points le gradient de pression respectivement entre un module d'échangeur à ailettes ondulées selon l'état de l'art et des modules d'échangeur à ailettes à structure TPMS à cellules à motif élémentaire Schwartz-D selon l'invention en fonction de leur facteur d'allongement.

[Fig 5] la figure 5 illustre avec des points différents rapports représentatifs de la compacité d'un module d'échangeur selon l'invention obtenu en faisant varier le facteur d'allongement F'x d'une structure TPMS à cellules à motif élémentaire Schwartz-D.

## Description détaillée

On précise que les différents éléments selon l'invention sont représentés uniquement par souci de clarté et qu'ils ne sont pas nécessairement à l'échelle.

Les inventeurs ont cherché à concevoir des échangeurs de chaleur dont les performances thermiques sont améliorées

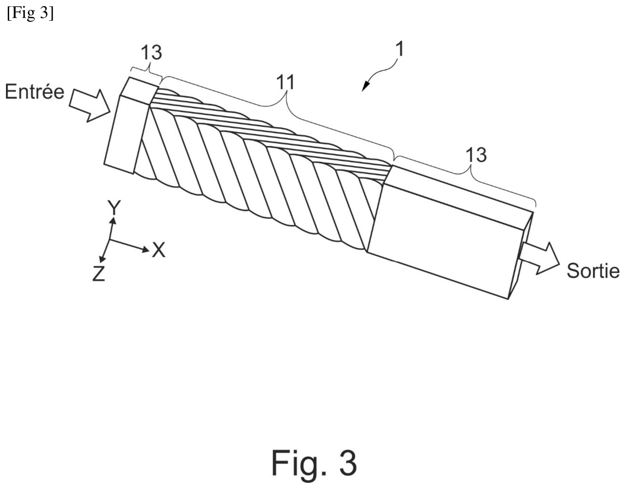

Les inventeurs proposent ainsi un module d'échangeur de chaleur 1 qui s'étend selon une direction longitudinale X, tel qu'illustré à la figure 3.

Ce module 1 comprend une zone d'échange thermique 11, et des collecteurs d'entrée 11 et de sortie 12 d'un fluide de travail, en tant que fluide d'un de deux circuits.

Au sein de ce module d'échangeur 1, la circulation des deux fluides peut être à courant croisé.

La zone d'échange thermique est constituée par une structure 11 dite TPMS (acronyme anglo-saxon « Triply Periodic Minimal Surface ») obtenue par réplication sur la longueur de cellules à motif élémentaire de type Schwartz-D selon la direction longitudinale X qui constitue l'axe principal d'écoulement du fluide de travail.

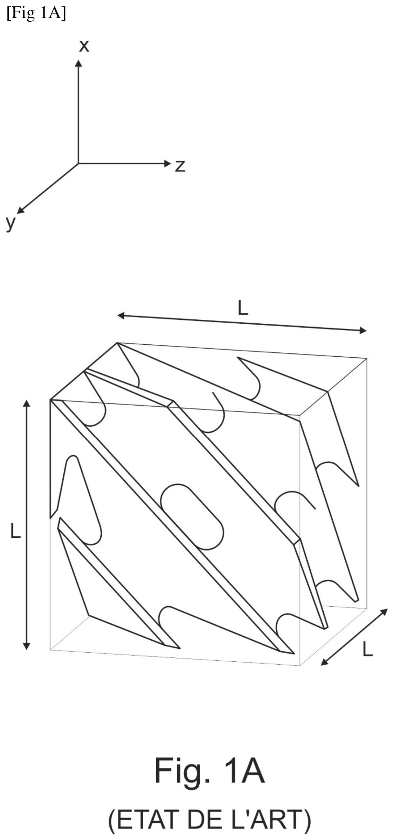

La figure 1A illustre une cellule unitaire selon l'état de l'art à motif Schwartz-D de base avec des dimensions homogènes $Lx = Ly = Lz = L$ selon les trois directions X, Y, Z orthogonales entre elles.

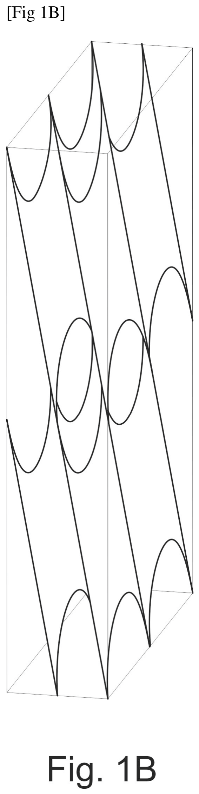

La figure 1B illustre une cellule unitaire selon l'invention à motif élémentaire Schwartz-D allongée selon les directions X et Y avec les dimensions $Lx = L*Fx$, $Ly = L*Fy$, $Lz = L*Fz$, avec des facteurs d'allongement Fx et Fy supérieurs à 1.

Selon l'invention, la structure TPMS 11 comprend des cellules à à motif élémentaire Schwartz-D qui ont été allongées le long des deux axes X et Y avec des facteurs d'allongement supérieur à 1.

Selon l'invention, une cellule est encore allongée d'un autre facteur F'x supérieur à 1 le long de la direction X, selon l'axe principal de l'écoulement du fluide de travail. Ce facteur est appliqué sur toute la longueur de la zone d'échange et n'est pas une fonction de la direction X, Y ou Z. La section de passage de l'écoulement varie en fonction du facteur d'allongement Fx mais elle reste constante tout le long de l'échangeur (le long de X). Ainsi, l'épaisseur de la paroi solide, c'est-à-dire l'épaisseur des ailettes est maintenue constante dans la structure 11.

Dans l'exemple illustré, la structure TPMS 11 comprend cinq portions 10, obtenue en réplication 4 fois cette portion selon la direction X.

A titre d'exemple illustratif, utilisé par la suite, les dimensions respectives d'un motif élémentaire Schwartz-D respectivement selon les directions, X, Y et Z sont égales à 17,91x9,5 x 3,21 mm avec 0,2 mm épaisseur d'ailette. Dans l'exemple utilisé également pour le calcul, le fluide de travail est de l'air.

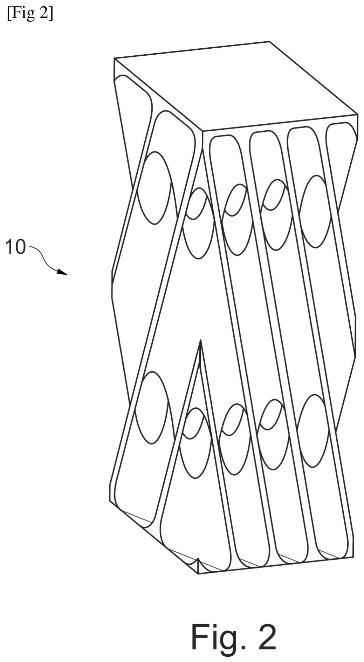

Une portion constituée de plusieurs cellules à motif élémentaire de type Schwartz-D allongée selon deux directions, réalisé au moyen du logiciel commercial « nTop Platform », est illustré à la figure 1. Dans le mode illustré, les longueurs périodiques Lx, Ly, Lz ne sont pas identiques selon les trois directions, X, Y et Z dont $Lx = 3L$, $Ly = 6L$, $Lz = L$ (L est la longueur d'un motif élémentaire Schwartz-D de base, $L = 3,21$ mm). La portion 10 obtenue en répétant ce motif élémentaire allongé selon Z est illustré à la figure 2.

La surface de la structure TPMS 11 qui est obtenue par réplication des portions 10 selon la direction X avec le facteur d'allongement F'x peut être approchée trigonométriquement par l'équation 7 suivante :

$$F(x,y,z) = \sin(2\pi x/L_x * F'_x)*\sin(2\pi y/L_y)*\sin(2\pi z/L_z) + \sin(2\pi x/L_x * F'_x)*\cos(2\pi y/L_y)*\cos(2\pi z/L_z) + \cos(2\pi x/L_x * F'_x)*\sin(2\pi y/L_y)*\cos(2\pi z/L_z) + \cos(2\pi x/L_x * F'_x)*\cos(2\pi y/L_y)*\sin(2\pi z/L_z) = 0$$

Dans le mode illustré, les longueurs périodiques Lx, Ly, Lz ne sont pas identiques selon les trois directions, X, Y et Z.

Les inventeurs ont réalisé la géométrie 3D et des calculs numériques CFD pour les modules 1 tels que montré à la figure 3 avec des valeurs différentes de Fx, entre 1,5 et 6, pour trouver un design optimal qui permet d'améliorer la performance thermique en augmentant significativement le transfert thermique tout en diminuant la perte de charges.

Le transfert thermique peut être caractérisé par le nombre adimensionnel j appelé coefficient de Colburn.

La perte de charges peut être caractérisée par le nombre adimensionnel f appelé coefficient de Fanning (frottement)

Ainsi, l'optimisation des rapports j/f et $j^3/f$ conduit à un échangeur plus compact avec une surface d'échange améliorée.

Pour réaliser ces calculs, les inventeurs ont donné en entrée à un logiciel commercial de simulation de fluide, dénommé ANSYS FLUENT, la géométrie du module selon la figure 3, avec cinq portions 10. Chaque portion est constituée par deux motifs élémentaires de type Schwartz-D.

A l'entrée, une température de fluide d'entrée est imposée avec un débit de 0,00313 kg/s et une température de Tin= 305,7K.

A la sortie, une condition de pression uniforme est appliquée.

La structure globale du module d'échangeur contient des nombres de lignes qui se répètent le long de la direction Z. Pour économiser le temps de calcul, des conditions symétriques sont mises aux deux parois latérales de la structure selon la figure 2. La paroi solide n'est pas présente dans le modèle.

Une température constante égale à 365,8K est imposée à l'interface entre le fluide de travail et la paroi de l'échangeur.

Afin de s'assurer que l'écoulement est bien établi, les résultats seront observés au niveau du quatrième portion 10 rencontré par le fluide depuis le collecteur d'entrée 12.

Des calculs de sensibilité ont montré que ce nombre de motifs est suffisant.

Le cinquième portion 10 rencontré par le fluide depuis le collecteur d'entrée 12 n'est pas pris en compte dans l'analyse pour éviter un biais éventuel dû à un effet de la sortie.

Le tableau 2 ci-après résume les résultats des calculs CFD réalisés avec un facteur d'allongement F'x variant entre 1 et 3.

On précise que le facteur d'allongement F'x égal à 1 est le design initial d'un module selon l'invention.

[Tableau 2]

| Facteur d'allongement F'x | 1 | 1,5 | 1,75 | 2 | 3 |
|---|---|---|---|---|---|
| Gradient de pression sur longueur $\Delta P/L$ ($*10^4$.Pa/m) | 4,88 | 2,58 | 2,09 | 1,78 | 1,21 |
| Nombre de Reynolds (Re) $*10^3$ | 3,41 | 3,40 | 3,40 | 3,40 | 3,41 |
| Nombre de Nusselt (Nu) *10 | 3,70 | 3,20 | 3,02 | 2,89 | 2,51 |
| Facteur de Colburn j $*10^{-3}$ | 15,9 | 10,4 | 9,79 | 9,35 | 8,12 |
| Facteur de Fanning f $*10^{-2}$ | 7,52 | 4,39 | 3,65 | 3,16 | 2,21 |
| Rapport j/f $*10^{-1}$ | 1,59 | 2,36 | 2,68 | 2,96 | 3,68 |
| Rapport $j^3/f$ * $10^{-5}$ | 2,30 | 2,53 | 2,57 | 2,59 | 2,42 |

De ce tableau 2, il ressort que :

- la perte de charges diminue considérablement avec la structure allongée.

- le rapport j/f augmente avec l'augmentation du facteur d'allongement F'x, ce qui signifie que la performance thermique de l'échangeur peut être nettement améliorée par rapport au cas de référence (F'x = 1).

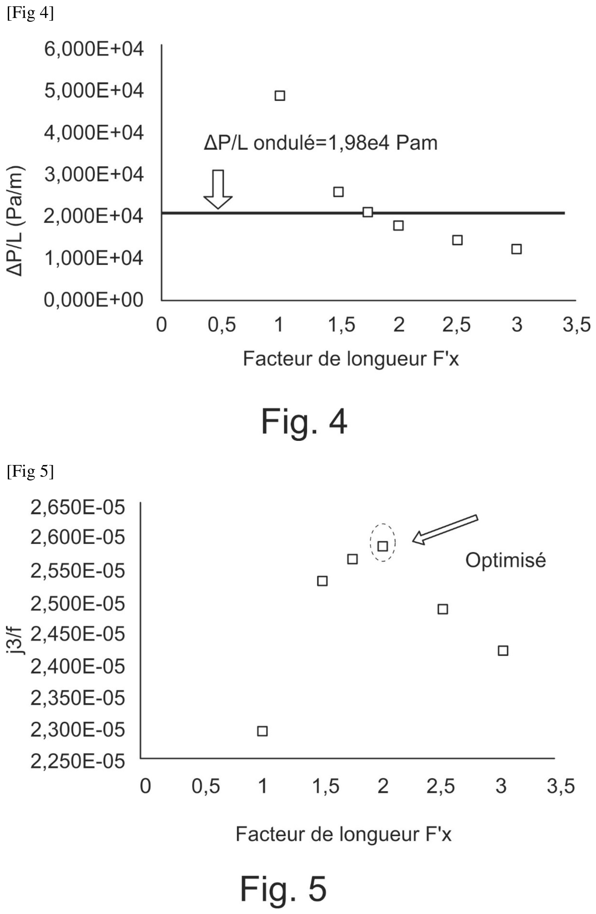

La figure 4 illustre le gradient de pression $\Delta P/L$ dans la direction X d'un module d'échangeur en fonction du facteur d'allongement F'x.

Il ressort de cette figure 4 que lorsque $F'_x \geq 1,75$, la perte de charges d'un module d'échangeur selon l'invention (figure 3) est inférieure à celle « $\Delta P/L$ ondulé » obtenue avec un échangeur à ailettes ondulées.

La figure 5 montre la comparaison du rapport $j^3/f$ obtenu en faisant varier le facteur d'allongement F'x entre 1 et 3 pour un module d'échangeur selon l'invention (figure 3).

Avec F'x = 2, $j^3/f$ atteint une valeur optimale. Cela signifie que l'allongement d'un facteur 2 dans la direction X permet d'augmenter aussi la compacité d'un module d'échangeur selon l'invention.

D'autres variantes et améliorations peuvent être apportées sans pour autant sortir du cadre de l'invention.

Dans le mode de réalisation illustré, les collecteurs d'entrée et de sortie du fluide ont une forme générale extérieure cubique. On peut envisager d'autres formes.

De même, dans le mode de réalisation illustré, la structure TPMS 11 est à cellules à motif élémentaire de type Schwartz-D. On peut envisager de réaliser des allongements selon un facteur F'x supérieur à 1 avec d'autres motifs élémentaires comme gyroïde, Schoen IWP, Schwarz P, Schoen G.

## Liste des références citées

[1] : *"Flow Characterization in Triply-Periodic-Minimal-Surface (TPMS) based Porous Geometries: Part 1 -Hydrodynamics"*, Surendra Singh Rathore et al., Transport in Porous Media 146 (8), Novembre 2022

## Revendications

1. Module (1) d'échangeur de chaleur à deux circuits de fluides, s'étendant selon une direction longitudinale (X) et dont un premier circuit comprend des ailettes sous la forme d'une structure d'échange thermique de surface minimale triplement périodique (TPMS) constituée d'au moins une cellule à motif élémentaire, allongée d'un facteur d'allongement Fx supérieur à 1 selon au moins la direction longitudinale X, et dont l'intérieur définit la section de passage du fluide du premier circuit qui est constante sur la longueur selon la direction X.

2. Module (1) d'échangeur de chaleur à deux circuits de fluides selon la revendication 1, l'épaisseur de la paroi solide de l'échangeur et/ou l'épaisseur des ailettes étant constante le long de trois axes X, Y et Z.

3. Module (1) d'échangeur de chaleur à deux circuits de fluides selon la revendication 1 ou 2, à partir d'une longueur uniforme de base L, les longueurs périodiques de chaque cellule à motif élémentaire égales à Lx = L*Fx, Ly = L*Fy, Lz = L*Fz en étant allongées selon respectivement au moins deux X et Y, de préférence selon les trois directions X, Y, Z orthogonales entre elles.

4. Module (1) d'échangeur de chaleur à deux circuits de fluides selon l'une des revendications précédentes, chaque cellule de la structure d'échange thermique TPMS étant en outre allongée d'un facteur d'allongement Fy et/ou Fz supérieur à 1 selon au moins une autre direction longitudinale Y et/ou Z, les directions X, Y, Z étant orthogonales entre elles.

5. Module (1) d'échangeur de chaleur à deux circuits de fluides selon l'une des revendications précédentes, chaque cellule de la structure d'échange thermique TPMS étant en outre allongée d'un autre facteur F'x supérieur à 1 le long de la direction X, selon l'axe principal de l'écoulement du fluide dans un des deux circuits.

6. Module (1) d'échangeur de chaleur à deux circuits de fluides selon l'une des revendications 3 à 5, la structure d'échange thermique TPMS étant à cellules à motif élémentaire Schwartz-D (Diamant) dont la fonction implicite de surface s'écrit selon l'équation (7) suivante:

$$F(x,y,z) = \sin(2\pi x/L_x * F'_x)*\sin(2\pi y/L_y)*\sin(2\pi z/L_z) + \sin(2\pi x/L_x * F'_x)*\cos(2\pi y/L_y)*\cos(2\pi z/L_z) + \cos(2\pi x/L_x * F'_x)*\sin(2\pi y/L_y)*\cos(2\pi z/L_z) + \cos(2\pi x/L_x * F'_x)*\cos(2\pi y/L_y)*\sin(2\pi z/L_z) = 0$$

7. Module (1) d'échangeur de chaleur à deux circuits de fluides selon l'une des revendications 1 à 6, la structure d'échange thermique TPMS étant à cellules à motif élémentaire choisi parmi gyroïde, Schoen IWP, Schwarz P, Schoen G.

8. Module (1) d'échangeur de chaleur à deux circuits de fluides selon l'une des revendications précédentes, le facteur d'allongement Fx étant compris entre 1 et 6.

**9.** Module (1) d'échangeur de chaleur à deux circuits de fluides selon l'une des revendications précédentes, le facteur d'allongement Fy selon une autre direction longitudinale Y étant compris entre 1 et 3.

**10.** Module (1) d'échangeur de chaleur à deux circuits de fluides selon l'une des revendications précédentes, les collecteurs d'entrée et de sortie du premier circuit étant agencés selon l'axe longitudinal (X) et aux extrémités longitudinales du module.

**11.** Echangeur de chaleur, comprenant une pluralité de modules d'échangeur (1) de chaleur selon l'une des revendications précédentes, reliés par une liaison fluidique entre eux ou non.

**12.** Utilisation de l'échangeur de chaleur selon la revendication 11, le fluide du premier circuit, en tant que fluide primaire étant un liquide et le fluide du deuxième circuit, en tant que fluide secondaire, étant un gaz.

[Fig 1A]

Fig. 1A
(ETAT DE L'ART)

[Fig 1B]

Fig. 1B

[Fig 2]

10

Fig. 2

[Fig 3]

Fig. 3

[Fig 4]

Fig. 4

[Fig 5]

Fig. 5

Europäisches Patentamt
European Patent Office
Office européen des brevets

**RAPPORT DE RECHERCHE EUROPEENNE**

Numéro de la demande

EP 26 15 2711

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2024/180494 A1 (HYPERGANIC PTE LTD [SG]) 6 septembre 2024 (2024-09-06) | 1-4,6-12 | INV. B33Y80/00 F28F7/02 |
| Y | * pages 9-13; figures 1-4 * | 5 | |
| X | JP 7 068678 B1 (NATURE ARCH CO LTD) 17 mai 2022 (2022-05-17) | 1-12 | |
| Y | * alinéas [0010] - [0033]; figures 1-5 * | 5 | |
| X | US 2020/292239 A1 (WIEDENHOEFER JAMES F [US]) 17 septembre 2020 (2020-09-17) | 1-6 | |
| Y | * alinéas [0015] - [0053]; figure 2e * | 5 | |
| X | US 2022/003503 A1 (IYER JAISREE KANNAN [US] ET AL) 6 janvier 2022 (2022-01-06) * alinéas [0057] - [0067]; figure 5b * | 1-6 | |
| A | IT 2023 0000 2640 A1 (FERRARI SPA [IT]) 16 août 2024 (2024-08-16) * le document en entier * | 1 | |
| A | US 2023/314082 A1 (KUROSAWA YUTA [JP] ET AL) 5 octobre 2023 (2023-10-05) * le document en entier * | 1-12 | DOMAINES TECHNIQUES RECHERCHES (IPC) F28F B33Y |
| A | CN 118 427 488 A (UNIV XI AN JIAOTONG) 2 août 2024 (2024-08-02) * le document en entier * | 1-12 | |

Le présent rapport a été établi pour toutes les revendications

| Lieu de la recherche | Date d'achèvement de la recherche | Examinateur |
|---|---|---|
| Munich | 11 juin 2026 | Merkt, Andreas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**  EP 26 15 2711

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-06-2026

| Document brevet cité au rapport de recherche | Date de publication | Membre(s) de la famille de brevet(s) | Date de publication |
|---|---|---|---|
| WO 2024180494 A1 | 06-09-2024 | EP      4425084 A1 | 04-09-2024 |
|  |  | WO   2024180494 A1 | 06-09-2024 |
| JP 7068678   B1 | 17-05-2022 | EP      4296601 A1 | 27-12-2023 |
|  |  | JP      7068678 B1 | 17-05-2022 |
|  |  | JP   2022151553 A | 07-10-2022 |
|  |  | JP   2022151825 A | 07-10-2022 |
|  |  | JP WO2022201608 A1 | 29-09-2022 |
|  |  | US   2024167768 A1 | 23-05-2024 |
|  |  | WO   2022201608 A1 | 29-09-2022 |
|  |  | WO   2022202977 A1 | 29-09-2022 |
| US 2020292239 A1 | 17-09-2020 | EP      3709206 A1 | 16-09-2020 |
|  |  | US   2020292239 A1 | 17-09-2020 |
|  |  | US   2021164733 A1 | 03-06-2021 |
| US 2022003503 A1 | 06-01-2022 | US   2022003503 A1 | 06-01-2022 |
|  |  | US   2024151472 A1 | 09-05-2024 |
| IT 202300002640 A1 | 16-08-2024 | EP      4417422 A1 | 21-08-2024 |
|  |  | US   2024278845 A1 | 22-08-2024 |
| US 2023314082 A1 | 05-10-2023 | CN      116892841 A | 17-10-2023 |
|  |  | JP      7785597 B2 | 15-12-2025 |
|  |  | JP   2023150163 A | 16-10-2023 |
|  |  | US   2023314082 A1 | 05-10-2023 |
| CN 118427488   A | 02-08-2024 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20210180885 A
- US 11389765 B2

- US 20230304743 A1

**Littérature non-brevet citée dans la description**

- **SURENDRA SINGH RATHORE et al.** Flow Characterization in Triply-Periodic-Minimal-Surface (TPMS) based Porous Geometries: Part 1 -Hydrodynamics. *Transport in Porous Media*, November 2022, vol. 146 (8)